# EUROPEAN PATENT APPLICATION

(11) **EP 4 672 443 A1**
(43) Date of publication of application: **31.12.2025**
(21) Application number: 25182493.4
(22) Date of filing: 12.06.2025
(51) Int. Cl.: H01M 50/133, H01M 10/04, H01M 50/102, H01M 50/107, H01M 50/136, H01M 50/167

(54) **SECONDARY BATTERY AND METHOD OF MANUFACTURING SAME**

(30) Priority: 24.06.2024 KR 20240082219
(71) Applicant: SAMSUNG SDI CO., LTD., Yongin-si, Gyeonggi-do 17084 (KR)
(72) Inventor: Moon, Sanghyup, Yongin-si 17084 (KR); Park, Keunwoo, Yongin-si 17084 (KR)
(74) Representative: Marks & Clerk LLP

(57) **Abstract**

A secondary battery includes an electrode assembly including a first electrode and a second electrode, a case accommodating the electrode assembly, the case including a bottom electrically connected to the second electrode, a sidewall connected to the bottom, and a top opening opposite the bottom, and a cap assembly coupled to one end of the sidewall of the case. The sidewall of the case includes a first cylindrical portion extending from the bottom, a second cylindrical portion extending from the first cylindrical portion, and a third cylindrical portion extending from the second cylindrical portion, the first to third cylindrical portions having different thicknesses, and the electrode assembly being accommodated in the first cylindrical portion and the second cylindrical portion.

## Description

### BACKGROUND

### 1. Field

The present disclosure relates to a secondary battery and a method of manufacturing the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

According to some embodiments of the present disclosure, there is provided a secondary battery including an electrode assembly including a first electrode and a second electrode, a case including a bottom electrically connected to the second electrode, a sidewall connected to the bottom, and a top opening opposite the bottom, and accommodating the electrode assembly and a cap assembly coupled to one end of the sidewall of the case, wherein the sidewall (of the case) includes a first cylindrical portion extending from the bottom, a second cylindrical portion extending from the first cylindrical portion, and a third cylindrical portion extending from the second cylindrical portion, the first to third cylindrical portions have different thicknesses, and the electrode assembly is accommodated in the first cylindrical portion and the second cylindrical portion.

In some embodiments, the sidewall (of the case) may include a bead portion bent from the third cylindrical portion.

In some embodiments, the thickness of the second cylindrical portion may be greater than the thickness of the first cylindrical portion and less than the thickness of the third cylindrical portion.

In some embodiments, the thickness of the second cylindrical portion may be from 110% to 120% of the thickness of the first cylindrical portion.

In some embodiments, the thickness of the first cylindrical portion may be greater than or equal to 0.15 mm.

In some embodiments, the thickness of the second cylindrical portion may be greater than or equal to 0.165 mm.

In some embodiments, the second cylindrical portion may include a first curved portion provided in an area in contact with the first cylindrical portion and a second curved portion provided in an area in contact with the third cylindrical portion.

In some embodiments, the thickness of the third cylindrical portion may be greater than the thickness of the first cylindrical portion, and the thickness of at least a portion of the second cylindrical portion may increase continuously between the thickness of the first cylindrical portion and the thickness of the third cylindrical portion.

In some embodiments, the thickness of the first cylindrical portion may be 0.15 mm or greater.

In some embodiments, the second cylindrical portion may have an average thickness of 0.165 mm or more.

In some embodiments, the length of the second cylindrical portion may be from 7% to 18% of the length of the third cylindrical portion.

In some embodiments, the thickness of the third cylindrical portion may be 0.25 mm or more.

According to some embodiments of the present disclosure, there is also provided a method of manufacturing a secondary battery including: preparing a cylindrical case including a bottom, a sidewall connected to the bottom, and a top opening opposite the bottom, inserting an electrode assembly into the case, forming a bead portion by bending the sidewall (of the case), mounting a cap assembly on an inner portion of the bead portion; and forming a crimp portion by bending an end of the sidewall (of the case), wherein the sidewall includes a first cylindrical portion extending from the bottom, a second cylindrical portion extending from the first cylindrical portion, and a third cylindrical portion extending from the second cylindrical portion, the first to third cylindrical portions have different thicknesses, and the electrode assembly is accommodated in the first cylindrical portion and the second cylindrical portion.

In some embodiments, the forming of the bead portion may include bending the third cylindrical portion of the sidewall.

In some embodiments, the forming of the crimp portion may include bending the third cylindrical portion of the sidewall.

In some embodiments, the thickness of the second cylindrical portion may be greater than the thickness of the first cylindrical portion and less than the thickness of the third cylindrical portion.

In some embodiments, the thickness of the second cylindrical portion may be from 110% to 120% of the thickness of the first cylindrical portion.

In some embodiments, the thickness of the first cylindrical portion may be greater than or equal to 0.15 mm, and the thickness of the second cylindrical portion may be greater than or equal to 0.165 mm.

In some embodiments, the thickness of the third cylindrical portion may be greater than the thickness of the first cylindrical portion, and the thickness of at least a portion of the second cylindrical portion may increase continuously between the thickness of the first cylindrical portion and the thickness of the third cylindrical portion.

In some embodiments, the length of the second cylindrical portion may be from 7% to 18% of the length of the third cylindrical portion.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the attached drawings, in which:
FIG. 1 illustrates a cross-sectional view of an electrode assembly according to embodiments of the present disclosure.
FIG. 2 illustrates a cross-sectional view of a shape of a case according to embodiments of the present disclosure.
FIG. 3 illustrates an enlarged longitudinal cross-sectional view showing portions of a sidewall of a case according to an embodiment of the present disclosure.
FIG. 4 illustrates an enlarged longitudinal cross-sectional view showing portions of a sidewall of a case according to another embodiment of the present disclosure.
FIG. 5 illustrates an enlarged longitudinal cross-sectional view showing portions of a sidewall of a case according to yet another embodiment of the present disclosure.
FIG. 6 illustrates a cross-sectional view of a shape of a case according to other embodiments of the present disclosure.
FIG. 7 illustrates an enlarged longitudinal cross-sectional view showing portions of a sidewall of a case according to still another embodiment of the present disclosure.
FIG. 8 illustrates an enlarged longitudinal cross-sectional view showing portions of a sidewall of a case according to yet another embodiment of the present disclosure.
FIG. 9 illustrates an example of crack test results for a secondary battery case according to another embodiment of the present disclosure.
FIG. 10 illustrates a flowchart showing a method of manufacturing a secondary battery according to embodiments.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, the dimensions and relative sizes of the shown regions may be exaggerated for clarity of description. That is, the dimensions shown in the drawings are for illustrative purposes only and are not intended to be limiting. In addition, throughout the specification, the same reference numerals designate the same elements.

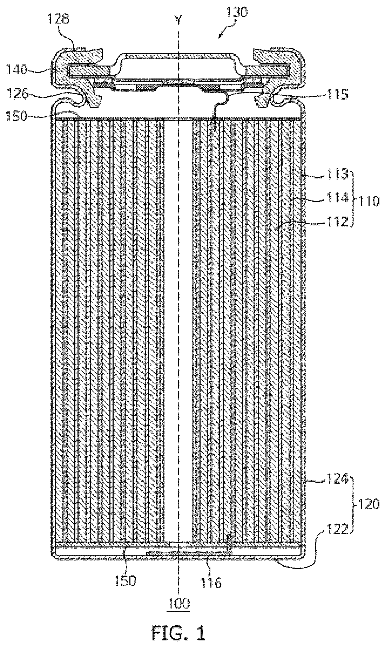

FIG. 1 illustrates an example of an electrode assembly according to embodiments of the present disclosure.

As shown in FIG. 1, a secondary battery 100 may include an electrode assembly 110, a case 120 accommodating the electrode assembly 110 and electrolyte therein, a cap assembly 130 coupled to an opening of the case 120 to seal the case 120, and an insulating plate 150 positioned between the electrode assembly 110 and the cap assembly 130 within the case 120.

The electrode assembly 110 may include a separator 114 and first and second electrodes 112 and 113 positioned on opposite sides of the separator 114, and may be wound in a jelly-roll shape about a winding axis Y

The first electrode 112 may include a first substrate and a first active material layer positioned on the first substrate. A first lead tab 115 may extend outward from a first uncoated portion of the first substrate where the first active material layer is not provided, and may be electrically connected to a terminal plate of the cap assembly 130.

The second electrode 113 may include a second substrate and a second active material layer located on the second substrate. A second lead tab 116 may extend outward from a second uncoated portion of the second substrate where the second active material layer is not provided, and may be electrically connected to the case 120. The first lead tab 115 and the second lead tab 116 may extend in opposite directions from each other.

The first electrode 112 may function as a positive electrode. In this case, the first substrate may include, e.g., an aluminum (Al) foil, and the first active material layer may include, e.g., a transition metal oxide. The second electrode 113 may function as a negative electrode. In this case, the second substrate may include, e.g., a copper foil or a nickel foil, and the second active material layer may include, e.g., graphite.

The separator 114 functions to prevent the first electrode 112 and the second electrode 113 from short-circuiting while allowing lithium ions to migrate. The separator 114 may include, e.g., a polyethylene film, a polypropylene film, a polyethylene-polypropylene film, or the like.

The case 120, together with the cap assembly 130, may form the exterior of the secondary battery 100. The case 120 may include a substantially cylindrical sidewall 124 and a bottom 122 connected to one end of the sidewall 124. An inwardly deformed bead portion 126 may be provided on the sidewall 124, and an inwardly bent crimp portion 128 may be provided on the opening-side end of the sidewall 124.

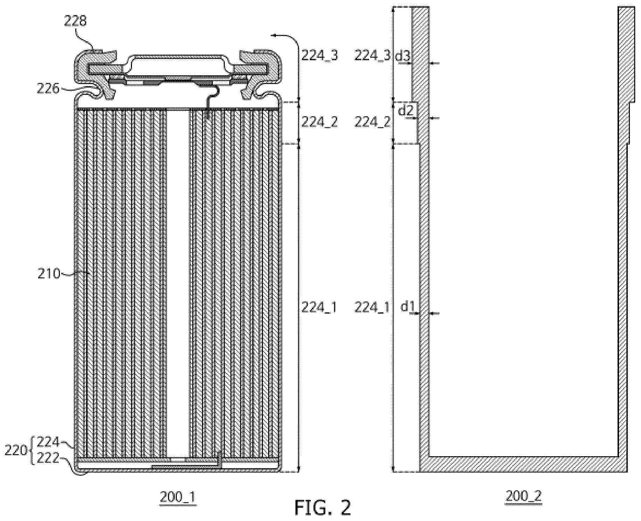

The sidewall 124 of the case 120 may have different thicknesses depending on the height section. For example, the sidewall 124 may include a first cylindrical portion extending from the bottom 122, a second cylindrical portion extending from the first cylindrical portion, and a third cylindrical portion extending from the second cylindrical portion. Herein, the first to third cylindrical portions may have different thicknesses. The bead portion 126 and the crimp portion 128 may be positioned on the third cylindrical portion. Specific examples of the shape of the case 120 will be described in more detail with reference to FIGS. 2 to 8.

The bead portion 126 may reduce movement of the electrode assembly 110 within the case 120, and may facilitate seating of the gasket 140 and the cap assembly 130. The crimp portion 128 may press the periphery of the cap assembly 130 by the gasket 140 to firmly fix the cap assembly 130. The case 120 may be made of iron, e.g., nickel-plated iron.

The insulating plate 150 may be positioned below the bead portion 126 in contact with the electrode assembly 110, and the insulating plate 150 may be provided with a tab opening through which the first lead tab 115 is withdrawn. The cap assembly 130, electrically connected to the first electrode 112 by the first lead tab 115, may face the electrode assembly 110 with the insulating plate 150 therebetween, and may be insulated from the electrode assembly 110 by the insulating plate 150.

FIG. 2 illustrates the shape of a case 220 according to embodiments of the present disclosure. In FIG. 2, a first example 200_1 is a longitudinal cross-sectional view showing a secondary battery according to the present disclosure, and a second example 200_2 is a longitudinal cross-sectional view showing a case of the secondary battery according to the present disclosure.

Referring to FIG. 2, a case 220 may include a bottom 222, a sidewall 224 connected to the bottom 222, and a top opening opposite the bottom 222. The case 220 may include a crimp portion 228 which is a bend provided on one end of the sidewall 224 and a bead portion 226 which is an inward bend of the sidewall 224 below the crimp portion 228. The electrode assembly 210 is accommodated in the case 220, and may be disposed below the bead portion 226.

**In** an embodiment, the sidewall 224 may include a first cylindrical portion 224_1, a second cylindrical portion 224_2, and a third cylindrical portion 224_3. The first cylindrical portion 224_1 may extend from the bottom 222. The second cylindrical portion 224_2 may extend from the first cylindrical portion 224_1, and the third cylindrical portion 224_3 may extend from the second cylindrical portion 224_2. For example, referring to FIG. 2, the first cylindrical portion 224_1, the second cylindrical portion 224_2, and the third cylindrical portion 224_3 may be integral with each other (e.g., may be formed of a same material into a monolithic and seamless structure). For example, each of the first cylindrical portion 224_1, the second cylindrical portion 224_2, and the third cylindrical portion 224_3 may have a same shape and structure around an entire perimeter of the case 220.

In an embodiment, the bead portion 226 may be formed by bending the third cylindrical portion 224_3. For example, the electrode assembly 210 may be accommodated within the first cylindrical portion 224_1 and the second cylindrical portion 224_2 of the case 220, and the bead portion 226 may be formed by bending above the electrode assembly 210. The crimp portion 228 may be formed by bending the end of the third cylindrical portion 224_3.

The second example 200_2 (right side of FIG. 2) shows the case 220 in a state before the sidewall 224 (i.e., the third cylindrical portion 224_3) is bent to form the bead portion 226 and the crimp portion 228. The second example 200_2 shows an example of correspondence in height to the case 220 shown in the first example 200_1. The relative sizes and thicknesses of the shown portions (e.g., the first cylindrical portion 224_1, the second cylindrical portion 224_2, and the third cylindrical portion 224_3), the shape of the case 220, and the like may be exaggerated for clarity of description and are not limited to the shapes shown. In addition, the sidewall 224 is shown as having a constant thickness in the first example 200_1 merely for convenience of illustration, and the sidewall 224 may be formed with different thicknesses depending on the height section, as shown in the second example 200_2.

Referring to the second example 200_2, the sidewall 224 may be formed with different thicknesses (e.g., along a radial direction of the can 220) depending on the height section. For example, each of the first cylindrical portion 224_1, the second cylindrical portion 224_2, and the third cylindrical portion 224_3 may have a different thickness. In addition, the inner diameter of the sidewall 224 may be formed to be constant regardless of the height section. Accordingly, the outer diameter of the sidewall 224 may be formed differently in the respective sections of the first cylindrical portion 224_1, the second cylindrical portion 224_2, and the third cylindrical portion 224_3.

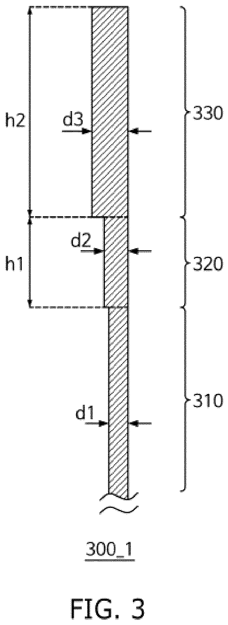

It is desirable for the thicknesses of the first to third cylindrical portions 224_1 to 224_3 to be designed to ensure that the case 220 is rigid. In addition, it is desirable for the thicknesses to be optimized in consideration of the space efficiency inside the case 220 and the weight of the battery. In particular, it is desirable for the third cylindrical portion 224_3, in which the bead portion 226 and the crimp portion 228 are formed, to be designed with a predetermined thickness or more to withstand the molding load caused by the bending of the case 220. In addition, it is desirable for the second cylindrical portion 224_2 to be designed with a predetermined thickness or more to withstand the molding load caused by the difference in rigidity between the first cylindrical portion 224_1 and the third cylindrical portion 224_3 in a case where the bead portion 226 and the crimp portion 228 are formed. Accordingly, the thickness d3 of the third cylindrical portion 224_3 may be set greater than the thickness d1 of the first cylindrical portion 224_1. In addition, the thickness d2 of the second cylindrical portion 224_2 may be set greater than the thickness d1 of the first cylindrical portion 224_1 and thinner than the thickness d3 of the third cylindrical portion 224_3. Specific examples of the shapes of the first to third cylindrical portions 224_1 to 224_3 will be described in detail with reference to FIGS. 3 to 8.

With this configuration, the thickness of the second cylindrical portion 224_2 may be set such that the thickness of the sidewall 224 does not change abruptly between the portion of the sidewall 224 of the case 220 where the electrode assembly 210 is accommodated (e.g., the first cylindrical portion 224_1 and the second cylindrical portion 224_2) and the portion of the sidewall 224 of the case 220 where the bead portion 226 and the crimp portion 228 are formed (e.g., the third cylindrical portion 224_3), thereby preventing cracks from forming in the sidewall 224 during the molding process of the sidewall 224.

FIG. 3 illustrates an enlarged longitudinal cross-sectional view showing portions of a sidewall 300_1 of a case according to an embodiment of the present disclosure.

Referring to FIG. 3, the sidewall 300_1 of the case may include a first cylindrical portion 310, a second cylindrical portion 320 extending from the first cylindrical portion 310, and a third cylindrical portion 330 extending from the second cylindrical portion 320.

In an embodiment, the thickness d2 of the second cylindrical portion 320 may be greater than the thickness d1 of the first cylindrical portion 310, and the thickness d3 of the third cylindrical portion 330 may be greater than the thickness d2 of the second cylindrical portion 320. In addition, each of the first cylindrical portion 310, the second cylindrical portion 320, and the third cylindrical portion 330 may have a constant thickness regardless of the height section (e.g., a constant thickness along its entire height). Accordingly, a stepped portion may be formed in an area where the first cylindrical portion 310 and the second cylindrical portion 320 are in contact, and a stepped portion may be formed in an area where the second cylindrical portion 320 and the third cylindrical portion 330 are in contact. For example, referring to FIG. 3, the second cylindrical portion 320 may overhang the first cylindrical portion 310, and the third cylindrical portion 330 may overhang the second cylindrical portion 320.

In a specific example, the thickness d1 of the first cylindrical portion 310 may be 0.15 mm or more, and the thickness d3 of the third cylindrical portion 330 may be 0.25 mm or more. In this case, the thickness d2 of the second cylindrical portion 320 may be 0.165 mm or more. The thickness d2 of the second cylindrical portion 320 may be from 110% to 120% of the thickness d1 of the first cylindrical portion 310.

In an embodiment, the height h1 of the second cylindrical portion 320 may be shorter than the height h2 of the third cylindrical portion 330. For example, the height h1 of the second cylindrical portion 320 may be from 7% to 18% of the height h2 of the third cylindrical portion 330.

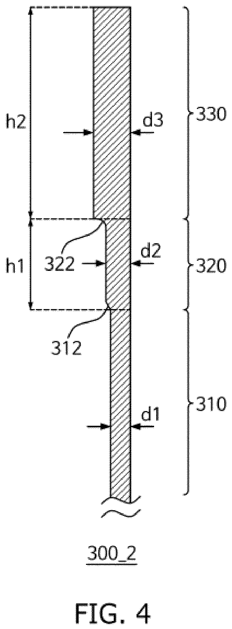

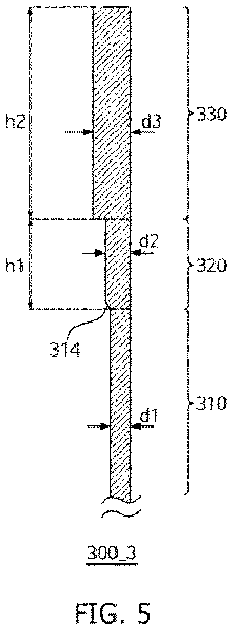

FIG. 4 illustrates an enlarged longitudinal cross-sectional view showing portions of a sidewall 300_2 of a case according to another embodiment of the present disclosure. FIG. 5 illustrates an enlarged longitudinal cross-sectional view showing portions of a sidewall 300_3 of a case according to yet another embodiment of the present disclosure. In the following description with reference to FIGS. 4 and 5, features described above with reference to FIG. 3 or any duplicate features from FIG. 3 will be omitted.

Referring to FIG. 4, the sidewall 300_2 of the case may include a first cylindrical portion 310, a second cylindrical portion 320, and a third cylindrical portion 330, wherein the second cylindrical portion 320 may include a first curved portion 312 formed in an area in contact with the first cylindrical portion 310 and a second curved portion 322 formed in an area in contact with the third cylindrical portion 330. In an embodiment, the first curved portion 312 and the second curved portion 322 may be formed on the outer circumferential surface of the second cylindrical portion 320.

In an embodiment, the thickness d3 of the third cylindrical portion 330 may be greater than the thickness d1 of the first cylindrical portion 310. In addition, each of the first cylindrical portion 310 and the third cylindrical portion 330 may have a constant thickness regardless of the height section.

In an embodiment, the thickness of the second cylindrical portion 320 may increase continuously in the first curved portion 312 and increase continuously in the second curved portion 322. A section having a constant thickness regardless of height may be formed between the first curved portion 312 and the second curved portion 322. The constant thickness section of the second cylindrical portion 320 may have a specific thickness d2. Accordingly, the thickness of the first curved portion 312 may increase continuously from the thickness d1 of the first cylindrical portion 310 to the specific thickness d2, and the thickness of the second curved portion 322 may increase continuously from the specific thickness d2 to the thickness d3 of the third cylindrical portion 330.

Referring to FIG. 5, the sidewall 300_3 of the case may include a first cylindrical portion 310, a second cylindrical portion 320, and a third cylindrical portion 330, and a first curved portion 314 may be formed in the area in contact with the first cylindrical portion 310 on the outer peripheral surface of the second cylindrical portion 320.

In an embodiment, the thickness d3 of the third cylindrical portion 330 is thicker than the thickness d1 of the first cylindrical portion 310, and each of the first cylindrical portion 310 and the third cylindrical portion 330 may have a constant thickness regardless of the height section. In the second cylindrical portion 320, a section having a specific thickness d2 regardless of the height section may be formed between the first curved portion 314 and the third cylindrical portion 330. Accordingly, the thickness of the first curved portion 314 may increase continuously from the thickness d1 of the first cylindrical portion 310 to the specific thickness d2. In addition, a stepped portion resulting from the difference in thickness between the second cylindrical portion 320 and the third cylindrical portion 330 may be formed in the area where the second cylindrical portion 320 and the third cylindrical portion 330 are in contact.

For example, referring to FIG. 5, the first curved portion 314 may be formed only in the area where the second cylindrical portion 320 contacts the first cylindrical portion 310. In another example, a curved surface may be formed only in the area where the second cylindrical portion 320 contacts the third cylindrical portion 330, and a stepped portion may be formed in the area where the second cylindrical portion 320 contacts the third cylindrical portion 330. The formation of the curved surfaces in the sections where the thickness of the case sidewall varies may improve the processability of the case manufacturing process.

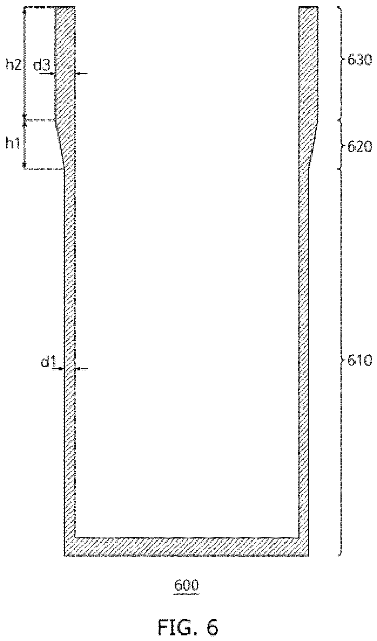

FIG. 6 illustrates the shape of a case 600 according to embodiments of the present disclosure.

Referring to FIG. 6, a sidewall of the case 600 may include a first cylindrical portion 610, a second cylindrical portion 620 extending from the first cylindrical portion 610, and a third cylindrical portion 630 extending from the second cylindrical portion 620. In an embodiment, each of the first cylindrical portion 610 and the third cylindrical portion 630 has a constant thickness regardless of the height section, and the thickness d3 of the third cylindrical portion 630 may be greater than the thickness d1 of the first cylindrical portion 610.

In an embodiment, the thickness of at least a portion of the second cylindrical portion 620 may increase continuously and/or discontinuously with increases in the distance from the bottom of the case between the thickness d1 of the first cylindrical portion 610 and the thickness d3 of the third cylindrical portion 630. In a specific example, the thickness d1 of the first cylindrical portion 610 may be 0.15 mm or more, and the thickness d3 of the third cylindrical portion 630 may be 0.25 mm or more. In this case, the average thickness of the second cylindrical portion 620 may be 0.165 mm or more. The average thickness of the second cylindrical portion 620 may be from 110% to 120% of the thickness d1 of the first cylindrical portion 610. In an embodiment, the height h1 of the second cylindrical portion 620 may be from 7% to 18% of the height h2 of the third cylindrical portion 630.

For example, referring to FIG. 6, the thickness of the second cylindrical portion 620 may increase constantly over the entire height section of the second cylindrical portion 620. In another example, the thickness of the second cylindrical portion 620 may be constant in some sections of the second cylindrical portion 620 and increase continuously in thickness in the remaining sections of the second cylindrical portion 620.

In yet another example, the thickness of the second cylindrical portion 620 may increase discontinuously over the entire height section of the second cylindrical portion 620. That is, the thickness of the second cylindrical portion 620 may vary appropriately to provide an average thickness of at least 0.165 mm while being greater than or equal to the thickness d1 of the first cylindrical portion 610 and equal to or less than the thickness d3 of the third cylindrical portion 630.

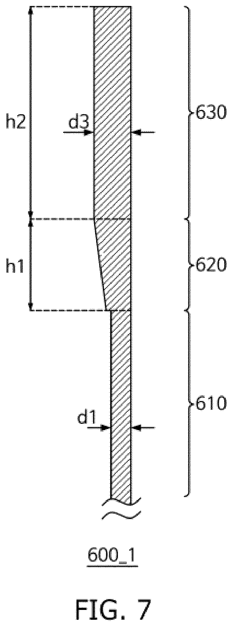

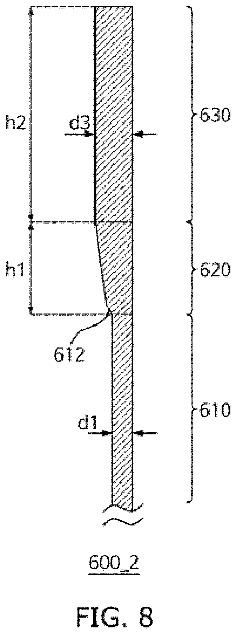

FIG. 7 illustrates an enlarged longitudinal cross-sectional view showing portions of a sidewall 600_1 of a case according to still another embodiment of the present disclosure. FIG. 8 illustrates an enlarged longitudinal cross-sectional view showing portions of a sidewall 600_2 of a case according to yet another embodiment of the present disclosure. In the following description with reference to FIGS. 7 and 8, features described above with reference to FIG. 3 or any duplicate features from FIG. 6 will be omitted.

Referring to FIG. 7, the sidewall 600_1 of the case may include a first cylindrical portion 610, a second cylindrical portion 620, and a third cylindrical portion 630. The thickness d3 of the third cylindrical portion 630 may be greater than the thickness d1 of the first cylindrical portion 610, and each of the first cylindrical portion 610 and the third cylindrical portion 630 may have a constant thickness regardless of the height section.

In an embodiment, the thickness of the second cylindrical portion 620 may increase continuously and/or discontinuously between the thickness d1 of the first cylindrical portion 610 and the thickness d3 of the third cylindrical portion 630 in a direction oriented away from the bottom of the case. In this case, the thickness of the second cylindrical portion 620 may be set to be greater than or equal to a specific thickness that is greater than the thickness d1 of the first cylindrical portion 610. Accordingly, in an area where the second cylindrical portion 620 and the first cylindrical portion 610 are in contact, a stepped portion may be formed due to the difference between the specific thickness of the second cylindrical portion 620 and the thickness d1 of the first cylindrical portion 610. In addition, as the thickness of the second cylindrical portion 620 increases continuously and/or discontinuously from the specific thickness to the thickness d3 of the third cylindrical portion 630 in a direction oriented away from the bottom of the case, the second cylindrical portion 620 and the third cylindrical portion 630 may be connected without a stepped portion on the contact area therebetween.

In addition or in another example, the thickness of the second cylindrical portion 620 may be set to be equal to or less than a specific thickness that is less than the thickness d3 of the third cylindrical portion 630, and the thickness of the second cylindrical portion 620 may increase continuously and/or discontinuously from the thickness d1 of the first cylindrical portion 610 to the specific thickness in a direction oriented away from the bottom of the case. In this case, the second cylindrical portion 620 and the first cylindrical portion 610 may be connected without a stepped portion in the contact area therebetween, and a stepped portion may be formed in the area where the second cylindrical portion 620 and the third cylindrical portion 630 are in contact.

In addition or in another example, the thickness of the second cylindrical portion 620 may be set to be equal to or less than a first thickness that is less than the thickness d3 of the third cylindrical portion 630, and the thickness of the second cylindrical portion 620 may increase continuously and/or discontinuously from a second thickness that is greater than the thickness d1 of the first cylindrical portion 610 to the first thickness that is less than the thickness d3 of the third cylindrical portion 630. In this case, stepped portions may be formed in both the area where the second cylindrical portion 620 and the first cylindrical portion 610 are in contact and the area where the second cylindrical portion 620 and the third cylindrical portion 630 are in contact.

That is, the thickness of the second cylindrical portion 620 may vary appropriately to provide an average thickness of at least 0.165 mm while being greater than or equal to the thickness d1 of the first cylindrical portion 610 and equal to or less than the thickness d3 of the third cylindrical portion 630.

Referring to FIG. 8, the sidewall 600_2 of the case includes a first cylindrical portion 610, a second cylindrical portion 620, and a third cylindrical portion 630, and a curved surface 612 may be formed on the outer peripheral surface of the second cylindrical portion 620 in an area in contact with the first cylindrical portion 610.

In an embodiment, the thickness of the curved surface 612 may increase continuously in a direction oriented away from the bottom of the case so that the curved surface 612 forms a curved shape. Specifically, the thickness of the curved surface 612 may increase continuously from the thickness d1 of the first cylindrical portion 610 to a specific thickness. In addition, the thickness of the second cylindrical portion 620 may increase continuously from the specific thickness to the thickness d3 of the third cylindrical portion 630 in the section between the curved surface 612 and the third cylindrical portion 630. In this case, the rate of change of the thickness may be discontinuous in an area where the section between the curved surface 612 and the third cylindrical portion 630 contacts in the curved surface 612, but the present disclosure is not limited thereto.

In FIG. 8, the curved surface 612 is shown as formed only in the area where the first cylindrical portion 610 and the second cylindrical portion 620 are in contact, but the location and number of the curved surfaces 612 are not limited. The curved surfaces 612 may additionally be formed on the outer circumferential surface of the second cylindrical portion 620 in the area where the third cylindrical portion 630 and the second cylindrical portion 620 are in contact.

For example, FIGS. 6 to 8 illustrate a constant increase in the thickness of the second cylindrical portion 620 over at least a section of the second cylindrical portion 620. However, the rate of change in the thickness of the second cylindrical portion 620 may vary appropriately such that the thickness of the second cylindrical portion 620 has an average thickness of at least 0.165 mm while being greater than or equal to the thickness d1 of the first cylindrical portion 610 and equal to or less than the thickness d3 of the third cylindrical portion 630.

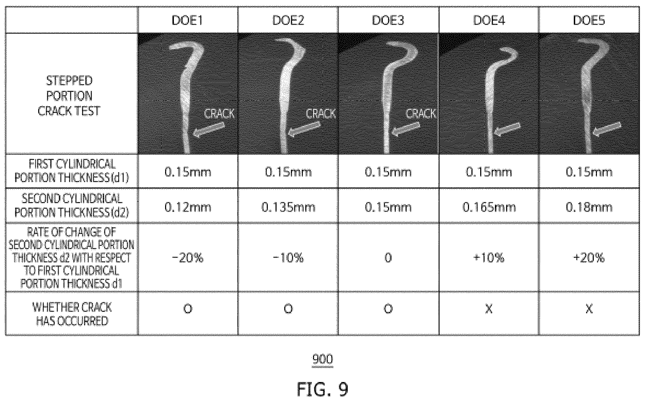

FIG. 9 illustrates an example of crack test results for a secondary battery case according to another embodiment of the present disclosure. The case of the secondary battery may include a bottom and a cylindrical sidewall. The sidewall includes a first cylindrical portion extending from the bottom, a second cylindrical portion extending from the first cylindrical portion, and a third cylindrical portion extending from the second cylindrical portion. The bead portion and the crimp portion formed on one end of the sidewall are provided by bending the third cylindrical portion, and the third cylindrical portion may be formed thicker than the first cylindrical portion to withstand a molding load applied during the bending process. In this case, the second cylindrical portion may be disposed between the first cylindrical portion and the third cylindrical portion, and may be designed with an optimized thickness to compensate for the difference in rigidity caused by the difference in thickness between the first cylindrical portion and the third cylindrical portion so as to prevent cracking.

A table 900 shown in FIG. 9 is a table representing whether a crack occurs in a case bending process, depending on the thickness d1 of the first cylindrical portion and the thickness d2 of the second cylindrical portion of the case. The thickness of the first cylindrical portion d1 was set to 0.15 mm, which is a thickness that may achieve rigidity for an outer material for accommodating an electrode assembly. The thickness of the third cylindrical portion was set to 0.25 mm, which is a thickness that may withstand a molding load applied in the case bending process.

As may be seen from the table 900, in cases where the thickness d2 of the second cylindrical portion was equal to or thinner than the thickness d1 of the first cylindrical portion (i.e., in the first three experimental examples), cracks occurred near an area where the first cylindrical portion and the second cylindrical portion are in contact. In contrast, in cases where the thickness d2 of the second cylindrical portion was greater than the thickness d1 of the first cylindrical portion by 10% or more (i.e., in the fourth and fifth experimental examples), no cracks were observed to occur.

Based on the results of FIG. 9, the thickness d2 of the second cylindrical portion may be designed to be thicker than the thickness d1 of the first cylindrical portion by 10% or more. In addition, the thickness d2 of the second cylindrical portion may be designed to be a predetermined thickness or less in consideration of the space efficiency inside the case, the weight of the battery, and the like. Accordingly, the thickness d2 of the second cylindrical portion may be designed to be 110% to 120% of the thickness d1 of the first cylindrical portion.

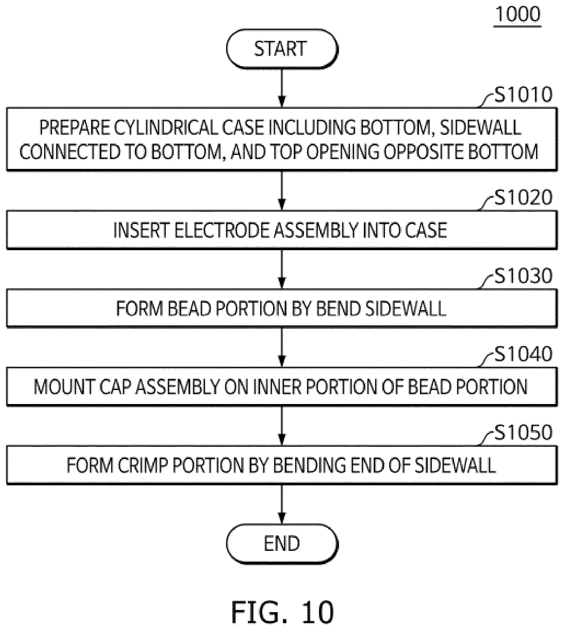

FIG. 10 illustrates a flowchart 1000 showing a method of manufacturing a secondary battery according to embodiments.

Referring to FIG. 10, the method of manufacturing a secondary battery may start by preparing a cylindrical case including a bottom, a sidewall connected to the bottom, and a top opening opposite the bottom (S1010).

Thereafter, the electrode assembly may be inserted into the case (S1020). In an embodiment, the sidewall may include a first cylindrical portion extending from the bottom, a second cylindrical portion extending from the first cylindrical portion, and a third cylindrical portion extending from the second cylindrical portion. An electrode assembly may be accommodated in the first cylindrical portion and the second cylindrical portion. For example, the length (e.g., height) of the second cylindrical portion may be from 7% to 18% of the length of the third cylindrical portion.

Thereafter, the sidewall of the case may be bent to form a bead portion (S1030). The bead portion may be formed by bending the third cylindrical portion of the sidewall. Subsequently, a cap assembly may be mounted on the inner portion of the bead portion (S1040). Thereafter, the end of the sidewall of the case may be bent to form a crimp portion (S1050). The crimp portion may be formed by bending the third cylindrical portion of the sidewall.

**In** an embodiment, the first and third cylindrical portions may have different thicknesses. For example, the thickness of the second cylindrical portion may be greater than the thickness of the first cylindrical portion and less than the thickness of the third cylindrical portion. In addition, the thickness of the second cylindrical portion may be from 110% to 120% of the thickness of the first cylindrical portion. Furthermore, the first cylindrical portion may have a thickness of at least 0.15 mm, and the second cylindrical portion may have a thickness of at least 0.165 mm.

In addition, the thickness of the third cylindrical portion may be greater than the thickness of the first cylindrical portion, and the thickness of at least a portion of the second cylindrical portion may increase continuously between the thickness of the first cylindrical portion and the thickness of the third cylindrical portion.

The flowchart of FIG. 10 and the above description are only illustrative of the present disclosure. For example, one or more of the steps in the flowchart and the above description may be added/altered/deleted, the order of one or more of the steps may be changed, and one or more of the steps may be performed simultaneously.

By way of summation and review, a secondary battery may be manufactured by inserting an electrode assembly into a case and then sealing the case with a cap assembly. For cylindrical secondary batteries, the cap assembly may be fixed by forming a bead portion and a crimp portion on the upper portion of the case. For example, after the electrode assembly is inserted into the case, the bead portion may be formed by bending the top portion of the case over the electrode assembly. Thereafter, the cap assembly may be seated on the bead portion, and the crimp portion may be formed by bending one end of the case, thereby fixing the cap assembly. However, cracks may be formed in the top portion of the case in the process of bending the case to form the bead portion and the crimp portion.

In contrast, the present disclosure provides a secondary battery with reduced cracking and a method of manufacturing the same. That is, according to some embodiments of the present disclosure, cracking during the molding process of the sidewall of the case may be prevented by preventing the thickness of the sidewall of the case from changing abruptly between the portion where the electrode assembly is accommodated and the portion where the bead portion and the crimp portion are provided.

However, aspects and features of the present disclosure are not limited to those described above, and other aspects and features not mentioned will be clearly understood by a person skilled in the art from the detailed description, described below.

Although the present disclosure has been described above with respect to embodiments thereof, the present disclosure is not limited thereto. Various modifications and variations can be made thereto by those skilled in the art within scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
an electrode assembly (110) including a first electrode (112) and a second electrode (113);
a case accommodating the electrode assembly (110), the case (120) including a bottom (122) electrically connected to the second electrode (113), a sidewall (124) connected to the bottom (122), and a top opening opposite the bottom (122); and
a cap assembly (130) coupled to one end of the sidewall (124) of the case (120),
wherein the sidewall (124) of the case (120) includes:
a first cylindrical portion (224_1, 310, 610) extending from the bottom,
a second cylindrical portion (224_2, 320, 620) extending from the first cylindrical portion (224_1, 310, 610), and
a third cylindrical portion (224_3, 330, 630) extending from the second cylindrical portion (224_2, 320, 620),
wherein the first to third cylindrical portions have different thicknesses, and
wherein the electrode assembly (110) is accommodated in the first cylindrical portion (224_1, 310, 610) and the second cylindrical portion (224_2, 320, 620).

2. The secondary battery as claimed in claim 1, wherein the sidewall (124) of the case (120) includes a bead portion (126, 226) bent from the third cylindrical portion (224_3, 330, 630).

3. The secondary battery as claimed in claim 1 or claim 2, wherein a thickness of the second cylindrical portion (224_2, 320, 620) is greater than a thickness of the first cylindrical portion (224_1, 310, 610) and less than a thickness of the third cylindrical portion (224_3, 330, 630).

4. The secondary battery as claimed in any preceding claim, wherein the thickness of the second cylindrical portion (224_2, 320) is 110% to 120% of the thickness of the first cylindrical portion (224_1, 310).

5. The secondary battery as claimed in any preceding claim, wherein the thickness of the first cylindrical portion (224_1, 310) is greater than or equal to 0.15 mm.

6. The secondary battery as claimed in any preceding claim, wherein the thickness of the second cylindrical portion (224_2, 320) is greater than or equal to 0.165 mm.

7. The secondary battery as claimed in any preceding claim, wherein the second cylindrical portion (214_2, 320) includes a first curved portion (312, 314) in an area in contact with the first cylindrical portion (214_1, 310) and a second curved portion (322) in an area in contact with the third cylindrical portion (214_3, 330).

8. The secondary battery as claimed any preceding claim, wherein a thickness of the third cylindrical portion (630) is greater than a thickness of the first cylindrical portion (610), and
a thickness of at least a portion of the second cylindrical portion (620) increases continuously between the thickness of the first cylindrical portion (610) and the thickness of the third cylindrical portion (630).

9. The secondary battery as claimed in any preceding claim, wherein a length of the second cylindrical portion (224_2, 320, 620) is 7% to 18% of a length of the third cylindrical portion (224_3, 330, 630).

10. The secondary battery as claimed in any preceding claim wherein a thickness of the third cylindrical portion (224_3, 330, 630) is 0.25 mm or more.

11. A method of manufacturing a secondary battery, the method comprising:
preparing a cylindrical case (120) including a bottom (122), a sidewall (124) connected to the bottom (122), and a top opening opposite the bottom (122);
inserting an electrode assembly (110) into the case (120);
forming a bead portion (126, 226) by bending the sidewall (124) of the case;
mounting a cap assembly (130) on an inner portion of the bead portion; and
forming a crimp portion (128, 228) by bending an end of the sidewall (124) of the case,
wherein the sidewall (124) is formed to include a first cylindrical portion (224_1, 310, 610) extending from the bottom, a second cylindrical portion (224_2, 320, 620) extending from the first cylindrical portion (224_1, 310, 610), and a third cylindrical portion (224_3, 330, 630) extending from the second cylindrical portion (224_2, 320, 620), such that the first to third cylindrical portions have different thicknesses, and the electrode assembly (110) is accommodated in the first cylindrical portion (224_1, 310, 610) and the second cylindrical portion (224_2, 320, 620).

12. The method as claimed in claim 11, wherein forming the bead portion (126, 226) includes bending the third cylindrical portion (224_3, 330, 630) of the sidewall.

13. The method as claimed in claim 11 or claim 12, wherein forming the crimp portion (128, 228) includes bending the third cylindrical portion (224_3, 330, 630) of the sidewall.

14. The method as claimed in any of claims 11 to 13, wherein a thickness of the second cylindrical portion (224_2, 320) is greater than a thickness of the first cylindrical portion (224_1, 310) and less than a thickness of the third cylindrical portion (224_3, 330,).

15. The method as claimed in any of claims 11 to 14, wherein:
a thickness of the third cylindrical portion (630) is greater than a thickness of the first cylindrical portion (610), and
a thickness of at least a portion of the second cylindrical portion (620) increases continuously between a thickness of the first cylindrical portion (610) and a thickness of the third cylindrical portion (630).
